# EUROPÄISCHE PATENTANMELDUNG

(11) **EP 4 847 817 A1**
(43) Veröffentlichungstag der Anmeldung: **02.12.2026**
(21) Anmeldenummer: 26180689.7
(22) Anmeldetag: 22.05.2026
(51) Int. Cl.: F16L 11/11, B21D 15/06, B29C 48/00, B29C 53/30, F16L 27/08

(54) **KUNSTSTOFFROHR**

(30) Priorität: 26.05.2025 DE 102025120542
(71) Anmelder: Fränkische Industrial Pipes GmbH & Co. KG, 97486 Königsberg (DE)
(72) Erfinder: Geuß, Markus, 97486 Königsberg (DE); Krauß, Manfred, 97265 Hettstadt (DE); Schröter, Sören, 96126 Maroldsweisach (DE); Valenta, Vit, 67401 T ebí (CZ)
(74) Vertreter: Weickmann & Weickmann PartmbB

(57) **Zusammenfassung**

Die Erfindung betrifft ein Kunststoffrohr (10), welches einen Glattrohrabschnitt (12) und einen Wellrohrabschnitt (14) aufweist, wobei eine Wandung des Kunststoffrohrs (10) im Bereich des Wellrohrabschnitts (14) Wellenberge (16) und Wellentäler (18) aufweist, wobei ein Wellenberg (16) und ein Wellental (18) durch eine jeweilige Flanke miteinander verbunden sind, wobei sich eine Wandstärke der Wandung des Kunststoffrohrs (10) im Bereich des Wellrohrabschnitts (14), gemessen in einer im Wesentlichen normalen Richtung in Bezug auf eine Wandungsoberfläche des Kunststoffrohrs (10), höchstens um 20% von einer Wandstärke der Wandung des Kunststoffrohrs (10) im Bereich des Glattrohrabschnitts (12) unterscheidet, wobei das Kunststoffrohr (10) unter Verwendung eines Extrusionsverfahrens ausgebildet ist, und wobei das Kunststoffrohr (10) im Bereich des Glattrohrabschnitts (12) und im Bereich des Wellrohrabschnitts (14) einen im Wesentlichen gleichen minimalen Innendurchmesser (d₁, d₂) aufweist.

## Beschreibung

Die vorliegende Erfindung betrifft eine Kunststoffrohr, welches zur Leitung von Fluid eingerichtet ist, wobei das Kunststoffrohr wenigstens einen Glattrohrabschnitt und wenigstens einen Wellrohrabschnitt aufweist, wobei eine Wandung des Kunststoffrohrs im Bereich des wenigstens einen Wellrohrabschnitts Wellenberge und Wellentäler aufweist, wobei ein Wellenberg und ein Wellental durch eine jeweilige Flanke miteinander verbunden sind.

Aus dem Stand der Technik sind derartige Kunststoffrohre zur Leitung von Fluid bekannt, welche wenigstens einen Glattrohrabschnitt und wenigstens einen Wellrohrabschnitt aufweisen, um beispielsweise das Rohr im Bereich des wenigstens einen Wellrohrabschnitts biegen zu können und so einen Verlauf des Rohrs verändern zu können. Solche Kunststoffrohre werden üblicherweise unter Verwendung eines Corrugators hergestellt, welcher eine Mehrzahl an Formungsflächen umfasst, wobei extrudierter Kunststoff durch ein Blasverfahren derart nach radial außen gedrückt wird, dass sich der Kunststoff an die Formungsflächen anschmiegt. Das heißt, Formungsflächen des Corrugators, über welche Glattrohrabschnitte an dem Kunststoffrohr erzeugt werden sollen, haben einen im Wesentlichen glatten Verlauf, wohingegen Formungsflächen des Corrugators, über welche Wellrohrabschnitte an dem Kunststoffrohr erzeugt werden sollen, einen welligen Verlauf aufweisen.

Wird der extrudierte Kunststoff nun nach radial außen in die Vertiefungen einer wellenförmigen Formungsfläche hineingedrückt, kommt es entsprechend zu einer Dehnung des Kunststoffmaterials und damit zu einer Verringerung der Wandstärke, im Vergleich zu denjenigen Abschnitten des Kunststoffrohrs, welche sich an Formungsflächenabschnitten anschmiegen, welche weiter radial innen angeordnet sind. Aufgrund dieser Verringerung der Wandstärke an denjenigen Stellen, welche im ausgebildeten Zustand des Kunststoffrohrs die Wellenberge des Wellrohrabschnitts bilden, kann es zu Festigkeitseinbußen und damit zu einer Beschädigung des Kunststoffrohrs beim Biegen kommen.

Alternativ kann das Kunststoffrohr derart ausgebildet werden, dass am fertiggestellten Kunststoffrohr ausgebildete Wellenberge, insbesondere eine Innenwandung des Kunststoffrohrs im Bereich der Wellenberge, zu einer Mittelachse des Kunststoffrohrs in einem im Wesentlichen gleichen radialen Abstand angeordnet sind wie eine Innenwandung eines Glattrohrabschnitts und sich Wellentäler des wenigstens einen Wellrohrabschnitts des Kunststoffrohrs nach radial innen in das Kunststoffrohr hinein erstrecken. Hierdurch kann jedoch eine Strömungseigenschaft für durch das Kunststoffrohr strömendes Fluid deutlich verschlechtert werden, sodass derartige Kunststoffrohre oftmals im Markt keine Akzeptanz finden.

Es ist daher die Aufgabe der vorliegenden Erfindung, ein Kunststoffrohr bereitzustellen, welches in der Lage ist, die eingangs erwähnten Nachteile zu beheben.

Diese Aufgabe wird gemäß der vorliegenden Erfindung durch ein Kunststoffrohr gelöst, welches zur Leitung von Fluid eingerichtet ist, wobei das Kunststoffrohr wenigstens einen Glattrohrabschnitt und wenigstens einen Wellrohrabschnitt aufweist, wobei eine Wandung des Kunststoffrohrs im Bereich des wenigstens einen Wellrohrabschnitts Wellenberge und Wellentäler aufweist, wobei ein Wellenberg und ein Wellental durch eine jeweilige Flanke miteinander verbunden sind, wobei sich eine Wandstärke der Wandung des Kunststoffrohrs im Bereich des wenigstens einen Wellrohrabschnitts, gemessen in einer im Wesentlichen normalen Richtung in Bezug auf eine Wandungsoberfläche des Kunststoffrohrs, höchstens um 20% von einer Wandstärke der Wandung des Kunststoffrohrs im Bereich des wenigstens einen Glattrohrabschnitts unterscheidet, wobei das Kunststoffrohr unter Verwendung eines Extrusionsverfahrens für ein Glattrohr ausgebildet ist, in welches der wenigstens eine Wellrohrabschnitt nachfolgend eingebracht ist, und wobei das Kunststoffrohr im Bereich des wenigstens einen Wellrohrabschnitts einen im Wesentlichen gleichen oder größeren minimalen Innendurchmesser aufweist als im Bereich des wenigstens einen Glattrohrabschnitts.

Es sei bereits an dieser Stelle darauf hingewiesen, dass es messtechnisch sehr gut erfassbar ist, ob ein Kunststoffrohr gemäß der vorliegenden Erfindung oder unter Verwendung eines Corrugators ausgebildet worden ist. So ist es eben, wie eingangs erwähnt, für unter Verwendung eines Corrugators hergestellte Kunststoffrohre typisch, dass eine Wandstärke im Bereich von Wellentälern des Wellrohrabschnitts deutlich von einer Wandstärke im Bereich von Wellenbergen des Wellrohrabschnitts abweicht.

Das erfindungsgemäße Kunststoffrohr ermöglicht es, dass eine Wandstärke über den gesamten Verlauf eines Wellrohrabschnitts, insbesondere über den gesamten Verlauf des Kunststoffrohrs, hinweg im Wesentlichen gleich verbleibt, selbst wenn sich die Wellentäler des Wellrohrabschnitts in einem im Wesentlichen gleichen radialen Abstand verglichen zu einem Glattrohrabschnitt des Kunststoffrohrs befinden und sich die Wellenberge von dort nach radial außen erstrecken. Auf diese Weise kann eine Strömungseigenschaft, wie sie im Bereich eines Glattrohrabschnitts vorliegt, im Wesentlichen auch im Bereich eines Wellrohrabschnitts, insbesondere im Bereich der Wellenberge, aufrechterhalten werden. Insbesondere kann so ermöglicht werden, dass ein durch das Kunststoffrohr strömendes Fluid Glattrohrabschnitte und Wellrohrabschnitte passieren kann, ohne (beziehungsweise lediglich in einem strömungstechnisch irrelevanten Ausmaß) durch nach radial innen vorstehende Strukturen, im Vergleich zu einem entsprechenden Kunststoffrohr ohne Wellrohrabschnitte, beeinflusst, insbesondere gebremst, zu werden.

Ein weiterer Vorteil des erfindungsgemäßen Kunststoffrohrs kann die erhöhte Abrasionsbeständigkeit sein. Da, im Gegensatz zu einem corrugierten Kunststoffrohr, bei dem erfindungsgemäßen Kunststoffrohr eine höhere Wandstärke im Bereich eines Wellenbergs erzielbar ist, kann die Abriebbeständigkeit deutlich verbessert werden.

Des Weiteren sei an dieser Stelle erwähnt, dass sich die Mittelachse des Kunststoffrohrs insbesondere auf einen Zustand des Kunststoffrohrs beziehen oder bezüglich eines Bereichs des Kunststoffrohrs betrachtet werden kann, in welchem das Kunststoffrohr eine im Wesentlichen gerade Längsausrichtung aufweist.

Ein minimaler Innendurchmesser des Kunststoffrohrs im Bereich des wenigstens einen Wellrohrabschnitts kann beispielsweise um einen Wert von 0,1 mm bis 0,5 mm größer sein als im Bereich des wenigstens einen Glattrohrabschnitts. Hierdurch kann ein Druckverlust in diesem Bereich reduziert oder vermieden werden.

Im Gegensatz zu einem Corrugationsprozess, in welchem das Kunststoffrohr in einem Urformungsverfahren mit Glattrohrabschnitten und Wellrohrabschnitten ausgebildet wird, kann das vorliegende erfindungsgemäße Kunststoffrohr unter Verwendung eines Umformungsverfahrens ausgebildet werden. Ein beispielhaftes Umformungsverfahren kann die folgenden Schritte umfassen:

### Schritt 1:

Erhitzen des Kunststoffrohrs in einem axialen Bereich davon bis zu seiner Erweichungstemperatur, welche insbesondere einer Temperatur unterhalb der Schmelztemperatur eines solchen Kunststoffs ist.

### Schritt 2:

Greifen von mehreren benachbarten Abschnitten des Kunststoffrohrs durch Greifeinheiten, welche an ihrer dem Kunststoffrohr zugewandten Seite eine, insbesondere gewellte, Formungsfläche, vorteilhafterweise eine Formungsfläche für genau einen Wellenberg, aufweisen. Die Greifeinheiten weisen in diesem Zustand einen Abstand zueinander, entlang der Längserstreckung des Kunststoffrohrs betrachtet, auf. Dabei kann ein Stützrohr zur Stabilisierung in das Kunststoffrohr eingeführt werden.

### Schritt 3:

Stauchung des Glattrohres durch ein Zusammenbewegen der Greifeinheiten derart, dass der Abstand von zueinander benachbarten Greifeinheiten reduziert wird, insbesondere sodass sich benachbarte Greifeinheiten kontaktieren.

### Schritt 4:

Aufblasen des Kunststoffrohrs nach radial außen derart, dass sich das Kunststoffrohr an die Formungsflächen der Greifeinheiten anschmiegt. Dies kann zum Beispiel bei einem Druck geschehen, welcher in einem Bereich von 6 bar bis 8 bar beträgt.

### Schritt 5:

Lösend der Greifeinheiten von dem Kunststoffrohr nach einer vorbestimmten Haltezeit der Greifeinheiten an dem Kunststoffrohr.

Ein erfindungsgemäßes Kunststoffrohr kann beispielsweise einen Berstdruck aufweisen, welcher um bis zu 50%, insbesondere um bis zu 30%, höher ist als ein unter Verwendung eines Corrugationsprozess hergestelltes Kunststoffrohr.

Insbesondere kann sich die Wandstärke der Wandung des Kunststoffrohrs im Bereich des wenigstens einen Wellrohrabschnitts, gemessen in einer im Wesentlichen normalen Richtung in Bezug auf eine Wandungsoberfläche des Kunststoffrohrs, höchstens um 15%, insbesondere höchstens um 10%, vorteilhafterweise höchstens um 5%, von der Wandstärke der Wandung des Kunststoffrohrs im Bereich des wenigstens einen Glattrohrabschnitts unterscheiden.

Die Wandstärke der Wandung des Kunststoffrohrs kann im Bereich des wenigstens einen Wellrohrabschnitts, gemessen in einer im Wesentlichen normalen Richtung in Bezug auf eine Wandungsoberfläche des Kunststoffrohrs, geringer sein als die Wandstärke der Wandung des Kunststoffrohrs im Bereich des wenigstens einen Glattrohrabschnitts. Dies kann beispielsweise darauf zurückzuführen sein, dass es auch bei der Ausbildung eines Wellrohrabschnitts des erfindungsgemäßen Kunststoffrohrs zu einer leichten Dehnung des Materials kommen kann.

Das Kunststoffrohr, insbesondere der wenigstens eine Glattrohrabschnitt, kann im Wesentlichen frei von Nahtstellen, insbesondere Graten und/oder Einkerbungen, sein. Da das erfindungsgemäße Kunststoffrohr insbesondere nicht unter Verwendung eines Corrugators, sondern beispielsweise unter Verwendung des weiter oben beschriebenen Umformungsverfahrens, hergestellt werden kann, können die für den Corrugationsprozess typischen Merkmale, wie beispielsweise Nahtstellen, welche insbesondere in Längsrichtung des Kunststoffrohrs verlaufen und durch das aneinander Anliegen von zwei Formbackenhälften des Corrugators entstehen, oder Grate, wie sie insbesondere durch das Ansaugen des Kunststoffmaterials in die Vertiefungen der Formbacken zur Ausbildung der Wellenberge entstehen, vermieden werden.

Ein Wellenberg und/oder ein Wellental des wenigstens einen Wellrohrabschnitts können/kann im Wesentlichen bogenförmig, insbesondere kreisbogenförmig, betrachtet in einer Seitenquerschnittsansicht in diesem Bereich, ausgebildet sein. Insbesondere große Krümmungsradien können einen Druckverlust in diesem Bereich reduzieren oder vermeiden. Dies kann besonders für einen jeweiligen Bereich einer Innenwandung eins Wellentals gelten, da hier durch einen großen Krümmungsradius eine Verwirbelung des vorbeiströmenden Fluids reduziert oder vermieden werden kann.

Dabei kann es vorgesehen sein, dass ein Radius eines Bogens eines Wellenbergs und ein Radius eines Bogens eines Wellentals im Wesentlichen gleich sein können. Zur Beurteilung hierfür kann insbesondere ein Radius eines Bogens und ein Radius eines Wellentals in einer Mitte einer jeweiligen Wandstärke oder ein Radius an einer radial äußeren Seite eines Wellenbergs und ein Radius an einem im Inneren des Kunststoffrohrs liegenden Abschnitt des Wellentals oder ein Radius eines Wellenbergs an einem im Inneren des Kunststoffrohrs angeordneten Abschnitt und ein Radius eines Wellentals entlang einer Außenwandung des Kunststoffrohrs betrachtet werden.

Generell ist es auch denkbar, dass eine Form eines Wellenbergs und/oder eines Wellentals von einer Form eines weiteren, insbesondere eines dazu benachbarten, Wellenbergs und/oder eines weiteren, insbesondere eines dazu benachbarten, Wellentals verschieden sein kann. So kann die Form des Wellrohrabschnitts derart optimiert werden, dass ein Druckverlust in diesem Bereich reduziert oder vermieden werden.

Ferner kann eine Form einer Innenwandung eines Wellenbergs und/oder eines Wellentals von einer Form einer Außenwandung desselben Wellenbergs und/oder Wellentals und/oder eines weiteren, insbesondere eines dazu benachbarten, Wellenbergs und/oder eines weiteren, insbesondere eines dazu benachbarten, Wellentals verschieden sein. So kann beispielsweise eine Innenwandung eines Wellenbergs im Wesentlichen rund oder oval ausgebildet sein, wohingegen eine Außenwandung eines Wellenbergs im Wesentlichen eckig, zum Beispiel rechteckig, ausgebildet sein kann. Eine so veränderte Außenform des Kunststoffrohrs kann auf spezielle Bauraumvorgaben optimiert sein.

Auch kann eine Wellenform, in Umfangsrichtung des Kunststoffrohrs betrachtet, nur abschnittsweise ausgebildet sein. Das heißt, eine Wellenform kann nur teilweise umlaufend ausgebildet sein. In dem Teil, in dem die Wellenform nicht ausgebildet ist, kann das Kunststoffrohr einem Glattrohrabschnitt gleichen.

Natürlich kann sich auch eine Form des wenigstens einen Glattrohrabschnitts über seine Längserstreckung hinweg an dessen Innenwandung und/oder Außenwandung verändern und/oder zu weiteren Glattrohrabschnitten unterschiedlich sein. So kann ein Glattrohrabschnitt zum Beispiel bereits vor dem weiter oben beschriebenen Umformprozess des Kunststoffrohrs in seinem Verlauf verändert worden sein, um an eine spätere, aber vorbestimmte Einbausituation angepasst zu sein.

Beispielsweise kann die Abfolge von Wellenbergen und Wellentälern im Bereich des wenigstens einen Wellrohrabschnitts im Wesentlichen sinusförmig verlaufen.

Vorteilhafterweise kann zwischen einer Flanke, welche einen Wellenberg mit einem Wellental verbindet, und einer Flanke, welche einen dazu benachbarten Wellenberg mit demselben Wellental verbindet, ein Abstand vorhanden sein. Ein solcher Abstand kann insbesondere zwischen einer Außenwandung des Kunststoffrohrs im Bereich der einen Flanke zu einer Außenwandung des Kunststoffrohrs im Bereich der anderen Flanke und/oder zwischen einer Innenwandung des Kunststoffrohrs im Bereich der einen Flanke und einer Innenwandung des Kunststoffrohrs im Bereich der anderen Flanke vorliegen.

Dabei kann der Abstand im Wesentlichen der Wandstärke der Wandung des Kunststoffrohrs im Bereich des wenigstens einen Wellrohrabschnitts entsprechen.

Das Material, aus welchem das Kunststoffrohr ausgebildet ist, kann Polyamid, insbesondere PA6, und/oder Polypropylen umfassen. Besonders vorteilhaft kann es sein, wenn das Material, aus welchem das Kunststoffrohr ausgebildet ist, einen Blend (ein Gemisch) aus Polyamid und Polypropylen umfasst, da das erfindungsgemäße Kunststoffrohr so die an sich bekannten vorteilhaften Eigenschaften von Polyamid als auch die an sich bekannten vorteilhaften Eigenschaften von Polypropylen aufweisen kann. Ein solcher Blend von Polyamid und Polypropylen ist jedoch bei einer Verwendung eines Corrugators zur Ausbildung des Kunststoffrohrs nicht einsetzbar, da das Material den im Corrugationsprozess notwendigen Materialstreckungen (Dehnungen) nicht folgen kann. Da, wie weiter oben beschrieben, bei dem erfindungsgemäßen Kunststoffrohr und dem beschriebenen beispielhaften Umformungsverfahren, wenn überhaupt, nur geringe Materialstreckungen (Dehnungen) auftreten, kann bei dem erfindungsgemäßen Kunststoffrohr ein solcher Blend zum Einsatz kommen.

Bei einem erfindungsgemäßen Kunststoffrohr kann ein Verhältnis eines maximalen Außendurchmessers des Kunststoffrohrs, insbesondere im Bereich des wenigstens einen Wellrohrabschnitts, zu einer Wandstärke des Kunststoffrohrs, insbesondere im Bereich des wenigstens einen Wellrohrabschnitts, ein Verhältnis aufweist, welches höchstens 20 sein. Weist ein erfindungsgemäßes Kunststoffrohr beispielsweise einen Außendurchmesser von 24 mm und eine Mindestwandstärke von 1,3 mm auf, so beträgt das Verhältnis Außendurchmesser/Wandstärke 18,46. Ein vergleichbares corrugiertes Kunststoffrohr weist bei einem Außendurchmesser von 24 mm üblicherweise eine Wandstärke von 1,0 mm auf, sodass das Verhältnis Außendurchmesser/Wandstärke 24 beträgt.

Ferner kann eine Längserstreckung des wenigstens einen Wellrohrabschnitts einen Wert aufweisen, welcher in einem Bereich von dem Einfachen bis dem Zehnfachen eines Durchmessers im Bereich des wenigstens einen Wellrohrabschnitts liegt.

Auch kann eine Flanke, welche an einem Übergang zwischen einem Glattrohrabschnitt und einem Wellrohrabschnitt angeordnet ist, einen Winkel zu der Mittelachse des Kunststoffrohrs in diesem Bereich aufweisen, welcher geringer als 90°, insbesondere geringer als 60°, vorteilhafterweise im Wesentlichen 45°, ist. Alternativ oder zusätzlich hierzu kann es denkbar sein, dass eine Flanke, welche an einem Übergang zwischen einem Glattrohrabschnitt und einem Wellrohrabschnitt des Kunststoffrohrs angeordnet ist, eine geringere radiale Erstreckung aufweist als eine Flanke, welche in einem mittigen Bereich des Wellrohrabschnitts angeordnet ist. Ein Wellenberg, welcher an einem Übergang zwischen einem Glattrohrabschnitt und einem Wellrohrabschnitt angeordnet ist, kann einen geringeren radialen Abstand zu der Mittelachse des Kunststoffrohrs aufweisen als ein Wellenberg, welcher in einem mittigen Bereich (betrachtet entlang der Längserstreckung des Wellrohrabschnitts) des Wellrohrabschnitts angeordnet ist. Auf diese Weise kann ein Biegeverhalten des Wellrohrabschnitts verbessert werden und eine Kerbwirkung zwischen dem Glattrohrabschnitt und dem Wellrohrabschnitt kann verringert werden, beispielsweise dadurch, dass eine Krümmung im Bereich des Übergangs zwischen Wellrohrabschnitt und Glattrohrabschnitt begrenzt und somit im Vergleich zu einer Krümmung in einem in Längsrichtung betrachteten mittigen Abschnitt des Wellrohrabschnitts geringer ist.

Des Weiteren kann eine jeweilige Flanke einen Winkel zu der Mittelachse des Kunststoffrohrs in diesem Bereich aufweisen, welcher höher als 60°, insbesondere höher als 80°, vorteilhafterweise im Wesentlichen 90°, ist. Auch ist es denkbar, dass eine solche Flanke einen Winkel zu der Mittelachse des Kunststoffrohrs aufweisen kann, welcher größer als 90° ist. Das heißt, ein kürzester Abstand zwischen zwei Punkten, welche auf der Wandung des Kunststoffrohrs einander gegenüberliegen liegen und, entlang der Wandung des Kunststoffrohrs gemessen, von einem gleichen Wellental gleich beabstandet sind, kann von dem Wellental aus in Richtung der beiden benachbarten Wellenberge verlaufend zunächst ansteigen, dann über den Verlauf der beiden Flanken hinweg abnehmen und dann zu den Wellenbergen hin wieder ansteigen. Insbesondere ein Winkel der Flanke zu der Mittelachse von im Wesentlichen 90° oder darüber kann unter Verwendung eines Corrugators nicht ausbildbar sein, da hierfür üblicherweise Entformungsschrägen der Außenwandung des Kunststoffrohrs vorzusehen sind, um das Kunststoffrohr aus den Formungsflächen entnehmen zu können.

In einer Weiterbildung der vorliegenden Erfindung kann der wenigstens eine Wellrohrabschnitt eine Mittelachse definieren, welche zu einer durch den wenigstens einen Glattrohrabschnitt definierten Mittelachse nicht koaxial angeordnet ist. Auf diese Weise kann ein zu dem Glattrohrabschnitt exzentrisch (nicht-koaxial) angeordneter Wellenabschnitt ausgebildet werden. Dies kann beispielsweise vorteilhaft sein, wenn ein späterer Verlauf, insbesondere eine spätere Krümmungsrichtung eines solchen Wellrohrabschnitts, bereits vor der Herstellung des fertigen Kunststoffrohrs bekannt ist und der Wellrohrabschnitt in radialer Richtung zu der Mittelachse des Kunststoffrohrs derart versetzt ausgebildet werden kann, dass sich im anschließenden gekrümmten Zustand des Kunststoffrohrs verbesserte Strömungseigenschaften realisieren lassen.

Ferner kann das Kunststoffrohr Versteifungsrippen aufweisen, welche von einer Wandung des Kunststoffrohrs, insbesondere im Bereich eines Glattrohrabschnitts, nach radial innen vorstehen. Solche Versteifungsrippen können insbesondere als Anti-Rotations-Rippen fungieren, welche dazu eingerichtet sind, eine Rotation des Kunststoffrohrs relativ zu einer übergeordneten Baugruppe und/oder eine Torsion des Kunststoffrohrs in sich zu verhindern oder zumindest dagegen einen höheren Widerstand zu bieten.

Die Innenwandung des Kunststoffrohrs im Bereich eines Wellenbergs kann eine Form aufweisen, welche sich von einer Form der Außenwandung des Kunststoffrohrs im Bereich dieses Wellenbergs unterscheidet. So kann, in einem Seitenquerschnitt, welcher die Mittelachse im Bereich dieses Wellenbergs umfasst, betrachtet, beispielsweise die Außenwandung des Kunststoffrohrs im Bereich dieses Wellenbergs im Wesentlichen bogenförmig ausgebildet sein und die Innenwandung des Kunststoffrohrs im Bereich dieses Wellenbergs kann einen im Wesentlichen geraden Verlauf aufweisen. Der gerade Verlauf kann sich dabei insbesondere in einer zu der Längserstreckungsrichtung und/oder der Mittelachse parallelen Richtung erstrecken.

Die vorliegende Erfindung wird im Folgenden anhand eines Ausführungsbeispiels mit Bezug auf die begleitenden Zeichnungen beschrieben werden. Es stellt dar:
- Figur 1: eine Seitenansicht eines erfindungsgemäßen Kunststoffrohrs; und
- Figur 2: eine Seitenquerschnittsansicht eines Wellrohrabschnitts des erfindungsgemäßen Kunststoffrohrs.

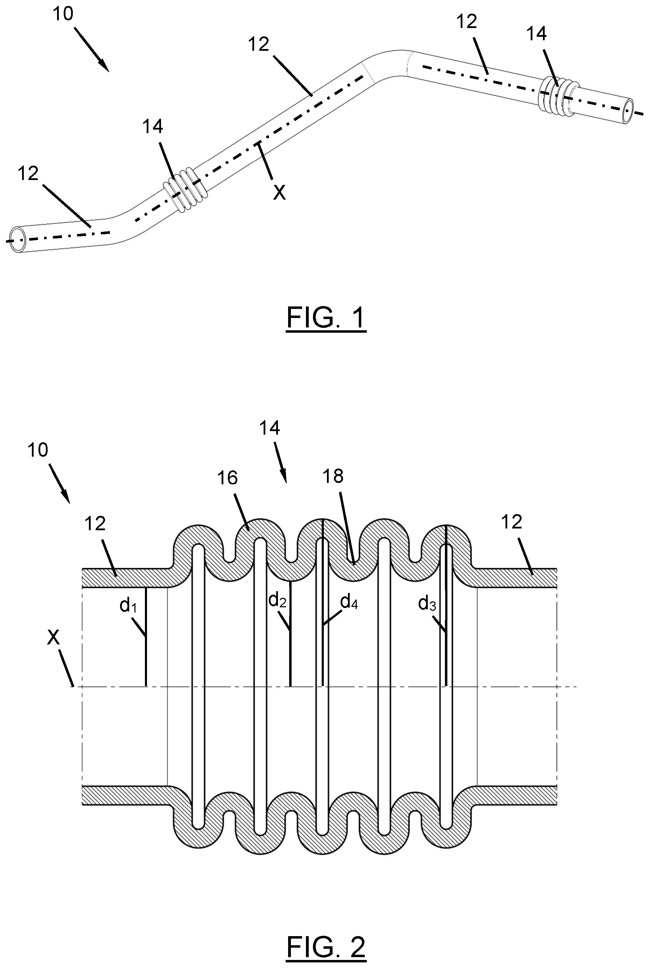

In Figur 1 ist ein erfindungsgemäßes Kunststoffrohr allgemein mit dem Bezugszeichen 10 bezeichnet. Das Kunststoffrohr 10 weist Glattrohrabschnitte 12 und Wellrohrabschnitte 14 auf. Das Wellrohr definiert durch seine im Wesentlichen zylindrische Form eine Mittelachse X, welche in Figur 1 nur abschnittsweise dargestellt ist.

Ein jeweiliger Wellrohrabschnitt 14 des Kunststoffrohrs 10 weist eine Abfolge an Wellenbergen 16 und Wellentälern 18 auf (siehe auch Figur 2).

Mit Bezug auf Figur 2 ist zu erkennen, dass ein radialer Abstand d₁ zwischen einer Innenwandung des Kunststoffrohrs 10 im Bereich eines Glattrohrabschnitts 12 und der Mittelachse X kleiner oder im Wesentlichen gleich zu einem radialen Abstand d₂ einer Innenwandung des Kunststoffrohrs 10 im Bereich eines Wellentals 18 des Wellrohrabschnitts 14 ist. So kann ein durch das Kunststoffrohr 10 strömendes Fluid Glattrohrabschnitte 12 und Wellrohrabschnitte 14 passieren, ohne durch nach radial innen vorstehende Strukturen beeinflusst, insbesondere gebremst, zu werden.

Auch ist in Figur 2 zu erkennen, dass ein radialer Abstand d₃ einer Außenwandung des Kunststoffrohrs 10 im Bereich eines Wellenbergs 16, welcher an einem Übergang zwischen dem Wellrohrabschnitt 14 und einem Glattrohrabschnitt 12 angeordnet ist, geringer ist als ein entsprechender radialer Abstand d₄ einer Außenwandung des Kunststoffrohrs 10 im Bereich eines Wellenbergs 16 des Wellrohrabschnitts 14, welcher von einem solchen Übergang zwischen Glattrohrabschnitt 12 und Wellrohrabschnitt 14 weiter beabstandet ist.

Dies kann sich insbesondere positiv auf ein Biegeverhalten des Kunststoffrohrs 10 und/oder eine Beschädigungsprävention des Kunststoffrohrs 10 auswirken.

## Patentansprüche

1. Kunststoffrohr (10), welches zur Leitung von Fluid eingerichtet ist, wobei das Kunststoffrohr (10) wenigstens einen Glattrohrabschnitt (12) und wenigstens einen Wellrohrabschnitt (14) aufweist, wobei eine Wandung des Kunststoffrohrs (10) im Bereich des wenigstens einen Wellrohrabschnitts (14) Wellenberge (16) und Wellentäler (18) aufweist, wobei ein Wellenberg (16) und ein Wellental (18) durch eine jeweilige Flanke miteinander verbunden sind, wobei sich eine Wandstärke der Wandung des Kunststoffrohrs (10) im Bereich des wenigstens einen Wellrohrabschnitts (14), gemessen in einer im Wesentlichen normalen Richtung in Bezug auf eine Wandungsoberfläche des Kunststoffrohrs (10), höchstens um 20% von einer Wandstärke der Wandung des Kunststoffrohrs (10) im Bereich des wenigstens einen Glattrohrabschnitts (12) unterscheidet, wobei das Kunststoffrohr (10) unter Verwendung eines Extrusionsverfahrens für ein Glattrohr ausgebildet ist, in welches der wenigstens eine Wellrohrabschnitt (14) nachfolgend eingebracht ist, und wobei das Kunststoffrohr (10) im Bereich des wenigstens einen Wellrohrabschnitts (14) einen im Wesentlichen gleichen oder größeren minimalen Innendurchmesser (d₁, d₂) aufweist als im Bereich des wenigstens einen Glattrohrabschnitts (12).

2. Kunststoffrohr (10) nach Anspruch 1,
**dadurch gekennzeichnet, dass** sich die Wandstärke der Wandung des Kunststoffrohrs (10) im Bereich des wenigstens einen Wellrohrabschnitts (14), gemessen in einer im Wesentlichen normalen Richtung in Bezug auf eine Wandungsoberfläche des Kunststoffrohrs (10), höchstens um 15%, insbesondere höchstens um 10%, vorteilhafterweise höchstens um 5%, von der Wandstärke der Wandung des Kunststoffrohrs (10) im Bereich des wenigstens einen Glattrohrabschnitts (12) unterscheidet.

3. Kunststoffrohr (10) nach einem der vorhergehenden Ansprüche, **dadurch gekennzeichnet, dass** die Wandstärke der Wandung des Kunststoffrohrs (10) im Bereich des wenigstens einen Wellrohrabschnitts (14), gemessen in einer im Wesentlichen normalen Richtung in Bezug auf eine Wandungsoberfläche des Kunststoffrohrs (10), geringer ist als die Wandstärke der Wandung des Kunststoffrohrs (10) im Bereich des wenigstens einen Glattrohrabschnitts (12).

4. Kunststoffrohr (10) nach einem der vorhergehenden Ansprüche, **dadurch gekennzeichnet, dass** das Kunststoffrohr (10), insbesondere der wenigstens eine Glattrohrabschnitt (12), im Wesentlichen frei von Nahtstellen, insbesondere Graten und/oder Einkerbungen, ist.

5. Kunststoffrohr (10) nach einem der vorhergehenden Ansprüche, **dadurch gekennzeichnet, dass** ein Wellenberg (16) und/oder ein Wellental (18) des wenigstens einen Wellrohrabschnitts (14) im Wesentlichen bogenförmig, insbesondere kreisbogenförmig, betrachtet in einer Seitenquerschnittsansicht in diesem Bereich, ausgebildet sind/ist, wobei insbesondere ein Radius eines Bogens eines Wellenbergs (16) und ein Radius eines Bogens eines Wellentals (18) im Wesentlichen gleich sind.

6. Kunststoffrohr (10) nach einem der vorhergehenden Ansprüche, **dadurch gekennzeichnet, dass** die Abfolge von Wellenbergen (16) und Wellentälern (18) im Bereich des wenigstens einen Wellrohrabschnitts (14) im Wesentlichen sinusförmig verläuft.

7. Kunststoffrohr (10) nach einem der vorhergehenden Ansprüche, **dadurch gekennzeichnet, dass** zwischen einer Flanke, welche einen Wellenberg (16) mit einem Wellental (18) verbindet, und einer Flanke, welche einen dazu benachbarten Wellenberg (16) mit demselben Wellental (18) verbindet, ein Abstand vorhanden ist, wobei insbesondere der Abstand im Wesentlichen der Wandstärke der Wandung des Kunststoffrohrs (10) im Bereich des wenigstens einen Wellrohrabschnitts (14) entspricht.

8. Kunststoffrohr (10) nach einem der vorhergehenden Ansprüche, **dadurch gekennzeichnet, dass** das Material, aus welchem das Kunststoffrohr (10) ausgebildet ist, Polyamid, insbesondere PA6, und/oder Polypropylen umfasst, und/oder
dass das Material, aus welchem das Kunststoffrohr ausgebildet ist, einen Blend aus Polyamid und Polypropylen umfasst.

9. Kunststoffrohr (10) nach einem der vorhergehenden Ansprüche, **dadurch gekennzeichnet, dass** ein Verhältnis eines maximalen Außendurchmessers des Kunststoffrohrs (10), insbesondere im Bereich des wenigstens einen Wellrohrabschnitts (14), zu einer Wandstärke des Kunststoffrohrs (10), insbesondere im Bereich des wenigstens einen Wellrohrabschnitts (14), ein Verhältnis aufweist, welches höchstens 20 ist.

10. Kunststoffrohr (10) nach einem der vorhergehenden Ansprüche, **dadurch gekennzeichnet, dass** eine Längserstreckung des wenigstens einen Wellrohrabschnitts (14) einen Wert aufweist, welcher in einem Bereich von dem Einfachen bis dem Zehnfachen eines Durchmessers im Bereich des wenigstens einen Wellrohrabschnitts (14) liegt.

11. Kunststoffrohr (10) nach einem der vorhergehenden Ansprüche, **dadurch gekennzeichnet, dass** eine Flanke, welche an einem Übergang zwischen einem Glattrohrabschnitt (12) und einem Wellrohrabschnitt (14) angeordnet ist, einen Winkel zu der Mittelachse (X) des Kunststoffrohrs (10) in diesem Bereich aufweist, welcher geringer als 90°, insbesondere geringer als 60°, vorteilhafterweise im Wesentlichen 45°, ist.

12. Kunststoffrohr (10) nach einem der vorhergehenden Ansprüche, **dadurch gekennzeichnet, dass** eine jeweilige Flanke einen Winkel zu der Mittelachse (X) des Kunststoffrohrs (10) in diesem Bereich aufweist, welcher höher als 60°, insbesondere höher als 80°, vorteilhafterweise im Wesentlichen 90°, ist.

13. Kunststoffrohr (10) nach einem der vorhergehenden Ansprüche, **dadurch gekennzeichnet, dass** der wenigstens eine Wellrohrabschnitt (14) eine Mittelachse (X) definiert, welche zu einer durch den wenigstens einen Glattrohrabschnitt (12) definierten Mittelachse (X) nicht koaxial angeordnet ist.

14. Kunststoffrohr (10) nach einem der vorhergehenden Ansprüche, **dadurch gekennzeichnet, dass** das Kunststoffrohr (10) Versteifungsrippen aufweist, welche von einer Wandung des Kunststoffrohrs (10), insbesondere im Bereich eines Glattrohrabschnitts (12), nach radial innen vorstehen.

15. Kunststoffrohr (10) nach einem der vorhergehenden Ansprüche, **dadurch gekennzeichnet, dass** die Innenwandung des Kunststoffrohrs im Bereich eines Wellenbergs eine Form aufweist, welche sich von einer Form der Außenwandung des Kunststoffrohrs im Bereich dieses Wellenbergs unterscheidet.
